# EUROPÄISCHE PATENTANMELDUNG

(11) **EP 2 050 414 A1**
(43) Veröffentlichungstag der Anmeldung: **22.04.2009**
(21) Anmeldenummer: 08017444.4
(22) Anmeldetag: 04.10.2008
(51) Int. Cl.: A61C 1/07

(54) **Ultraschall-Handstück**

(30) Priorität: 15.10.2007 DE 102007049514
(71) Anmelder: Dürr Dental AG, 74321 Bietigheim-Bissingen (DE)
(72) Erfinder: Kirstgen, Udo, 74379 Ingersheim (DE)
(74) Vertreter: Ostertag, Reinhard

(57) **Zusammenfassung**

Ein Ultraschall-Handstück (10), insbesondere für dentale und medizinische Anwendungen, hat eine Antriebseinheit (12) zum Bewegen eines Werkzeuges (28) über einen Koppelkopf (24). Eine Zuführeinrichtung (18, 22) für abrasives Arbeitsfluid umfasst einen flexiblen Schlauch (22), dessen eines Ende mit einem in der Antriebseinheit (12) verlaufenden Zuführkanal (18) verbunden ist und dessen Abgabeende in einer clipähnlich ausgebildeten Führungsbohrung (64) des Koppelkopfes positioniert ist.

## Beschreibung

Die Erfindung betrifft ein Ultraschall-Handstück, insbesondere für dentale und medizinische Anwendungen gemäß dem Oberbegriff des Anspruches 1.

Derartige Ultraschall-Handstücke werden für dentale Zwecke, insbesondere für die Entfernung von Plaque, eingesetzt. Aus der DE 10 2005 044 074 A1 ist ein gattungsgemäßes Ultraschall-Handstück bekannt. Die Antriebseinheit dient zur Bereitstellung einer hochfrequenten Oszillationsbewegung in einem Frequenzbereich von wenigen 100 Hertz bis zu 50 kHz und mehr. Dazu weist die Antriebseinheit wenigstens ein Antriebselement aus einem piezoelektrischen oder magnetostriktiven Material auf, das bei Anlegen einer elektrischen Wechselspannung oder eines oszillierenden Magnetfelds eine lineare Oszillationsbewegung erzeugt.

Die Oszillationsbewegung wird in einen Arbeitskopf eingeleitet, der einer Umlenkung und gegebenenfalls einer Wandlung der linearen Oszillationsbewegung dient. Das heißt, dass die in einer ersten Raumrichtung eingeleitete lineare Oszillationsbewegung in eine für die Anwendung des Werkzeugs günstige Oszillationsbewegung in einer zweiten Raumrichtung oder gegebenenfalls in eine Schwenkbewegung umgewandelt wird.

Dem Arbeitskopf ist eine Zuführeinrichtung für ein Arbeitsfluid, insbesondere für ein Gemisch aus Wasser und abrasiven Partikeln, zugeordnet. Die Zuführeinrichtung gibt das Arbeitsfluid in Richtung auf die Werkzeugoberfläche ab.

Bei einem im Markt befindlichen Ultraschall-Handstück umfaßt die Zuführeinrichtung eine kleine starre Düse, die in eine Gewindebohrung am Ende eines Zuführkanales eingeschraubt wird. Diese verstopft leicht und ist nur mühsam auszutauschen.

Die Aufgabe der Erfindung besteht darin, ein Ultraschall-Handstück gemäß dem Oberbegriff des Anspruchs 1 im Hinblick auf die Betriebssicherheit und Bedienerfreundlichkeit der Zuführeinrichtung für das Arbeitsfluid zu verbessern.

Diese Aufgabe ist durch ein Ultraschall-Handstück mit den Merkmalen des Anspruchs 1 gelöst.

Die erfindungsgemäße Auswechselbarkeit des Endabschnitts ermöglicht einen Austausch des am stärksten störungsanfälligen Bereichs der Zuführeinrichtung. Für den Fall, dass der Endabschnitt mit eingetrocknetem Arbeitsfluid verengt oder zugesetzt ist, kann ein einfacher Ausbau des Endabschnittes zur Reinigung oder zum Austausch gegen einen neuen Endabschnitt vorgenommen werden.

Bei der Weiterbildung der Erfindung gemäß dem Anspruch 2 ist vorteilhaft, dass der Endabschnitt der Zuführeinrichtung einfach an die geometrischen Verhältnisse im Arbeitskopf angepasst werden kann und nicht vorgeformt werden muss. Die Elastizität des Endabschnitts vermindert bzw. verhindert einen starken Kontakt zum Arbeitskopf, wodurch dieser bedämpft werden könnte. Als flexible Materialien kommen vorzugsweise Elastomere, insbesondere Silikonmaterialien, zum Einsatz.

Bei der Weiterbildung der Erfindung gemäß dem Anspruch 3 ist vorteilhaft, dass der Endabschnitt einfach durch Abkoppeln von einem Kupplungsstutzen der Zuführeinrichtung ausgetauscht werden kann. Vorzugsweise hat der Kupplungsstutzen eine im Wesentlichen zylindrische Außenkontur, und auf den der flexible Endabschnitt aufgeschoben werden kann.

Bei der Weiterbildung der Erfindung gemäß dem Anspruch 4 ist vorteilhaft, dass der flexible Endabschnitt in der Führungsbohrung gehalten ist und somit eine vorgebbare Ausströmungsrichtung für das Arbeitsfluid eingehalten werden kann. Gleichzeitig wird erreicht, dass das Arbeitsfluid sehr nahe beim Werkzeug abgegeben wird und dieses oder die zu bearbeitende Oberfläche überwiegend erreicht.

Bei der Weiterbildung der Erfindung gemäß dem Anspruch 5 ist vorteilhaft, dass der Arbeitsfluidstrahl in der Nachbarschaft des Werkzeug-Spannkopfes auf eine Oberfläche des Werkzeugs oder unmittelbar auf den Arbeitsbereich des Werkzeugs trifft und sich dann auf der getroffenen Fläche in den Eingriffsbereich zwischen Werkzeug und zu bearbeitender Oberfläche hineinbewegt. Auch hierdurch wird eine effiziente Nutzung des Arbeitsfluids ohne große Verluste sichergestellt ist.

Bei der Weiterbildung der Erfindung gemäß dem Anspruch 6 ist vorteilhaft, dass die Wand der Führungsbohrung einen C-förmigen Clip bildet, wodurch ein einfaches seitliches Einsetzen des auswechselbaren Endabschnittes der Zuführeinrichtung möglich ist.

Bei einem Handstück gemäß Anspruch 7 erhält man auf einfache Weise eine unverlierbare Verbindung des freien Ende des auswechselbaren Endabschnittes mit dem Koppelkopf.

Gemäß Anspruch 8 ist der auswechselbare Endabschnitt am Abgabeende positioniert, jedoch nicht nennenswert oszillationsmäßig mit dem Koppelkörper verbunden, so dass letzterer nicht nennenswert bedämpft wird.
Die Weiterbildung gemäß Anspruch 9 dient ebenfalls dem Kleinhalten einer Bedämpfung des Koppelkörpers und erleichtert ferner eine Anpassung der Geometrie des auswechselbaren Endabschnittes an die Lage und Orientierung von einlaßseitiger Anschlussstelle und Führungsbohrung.

Die Weiterbildung gemäß Anspruch 10 ist im Hinblick auf einfache und preisgünstige Fertigung des auswechselbaren Endabschnittes von Vorteil.

Ein Handstück gemäß Anspruch 11 zeichnet sich durch geringe Abmessungen in zur Achse der Antriebseinheit senkrechter Richtung aus. Diese ist in der Regel zugleich die Achse eine Griffs des Handstückes. Außerdem kann das Arbeitsfluid so auch die Antriebseinheit kühlen.

Die Weiterbildung gemäß Anspruch 12 ist im Hinblick auf leichten Ein- und Ausbau des auswechselbaren Endabschnittes von Vorteil.

Die Weiterbildung gemäß Anspruch 13 dient einer sicheren Festlegung des Schlauchs am Schlauchstutzen. Zu diesem Zweck weist der Schlauchstutzen eine oder mehrere umlaufende Sicherungsrippen auf, die eine zuverlässige, kraftschlüssige Verriegelung des flexiblen Endabschnitts gewährleisten.

Die Weiterbildung gemäß Anspruch 14 ermöglicht eine Minimierung der vom Endabschnitt hervorgerufenen Bedämpfung der Oszillation des Koppelkopfs und vermindert auch eine lokale Erwärmung des Endabschnitts, wie sie ansonsten durch ungewollte Einkopplung von Ultraschallenergie auftritt.

Die Weiterbildung gemäß Anspruch 15 hat den Vorteil, dass der Koppelabschnitt des Endabschnitts selbsttragend ist und keinerlei Abstützung bedarf. Dies ist insbesondere darauf zurückzuführen, dass der Radius des Koppelabschnitts größer als der Radius des Austrittsabschnitts ist. Damit wird eine kontaktarme oder kontaktfreie Aufnahme des Endabschnitts im Koppelkopf erreicht.

Die Weiterbildung gemäß Anspruch 17 hat den Vorteil, dass der Austrittsabschnitt nicht oder nur in geringem Maße mit der Führungsbohrung des Koppelkopfs in Kontakt kommt und somit eine Bedämpfung der Oszillation des Koppelkopfs vermieden wird. Vorzugsweise ist der Radius des Austrittsabschnitts zumindest um eine lokal an der Führungsbohrung auftretende Amplitude der Oszillation kleiner als der Radius der Führungsbohrung, so dass bei korrekter Montage des Endabschnitts am Schlauchstutzen keine Berührung zwischen Austrittsabschnitt und Führungsbohrung auftritt.

Nachstehend werden Ausführungsbeispiele der Erfindung anhand der Zeichnung näher beschrieben. In dieser zeigen:
- Figur 1: eine perspektivische Darstellung eines Ultraschall-Handstücks für Dentalanwendungen in einem Gebrauchszustand;
- Figur 2: eine perspektivische Explosionsdarstellung des Ultraschall-Handstücks gemäß der Figur 1;
- Figur 3: einen Längsmittelschnitt des Ultraschall-Handstücks gemäß der Figur 1;
- Figur 4: eine vergrößerten Ausschnitt der Schnittdarstellung gemäß der Figur 3;
- Figur 5: einen nochmals vergrößerten Schnitt durch einen Werkzeug-Spannkopf des Ultraschall-Handstückes gemäß den Figuren 1 bis 4; und

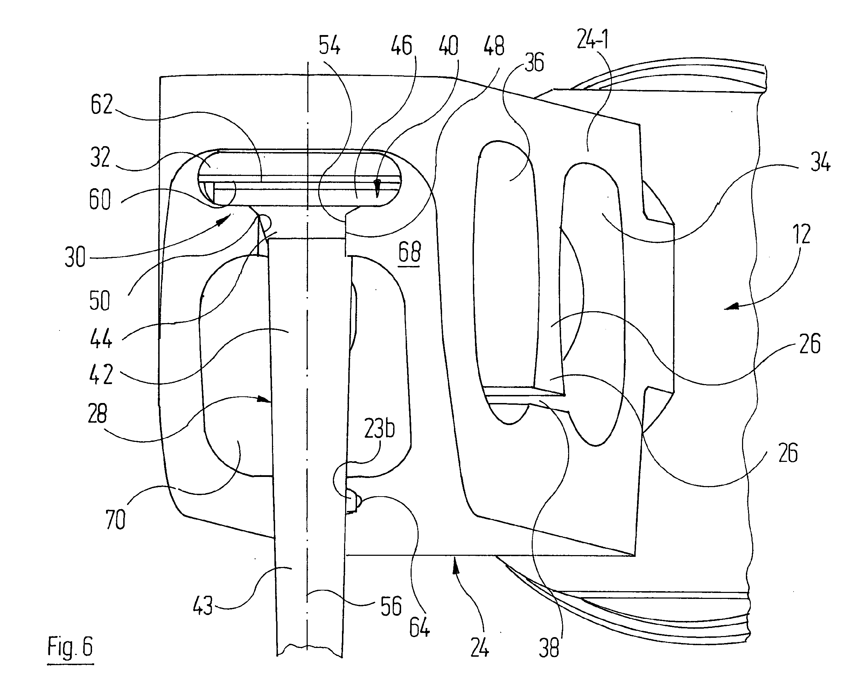

- Figur 6: eine perspektivische Endansicht des Ultraschall-Handstücks mit eingesetztem Werkzeug schräg von vorn gesehen

- Figur 7: einen leicht perspektivischen Längsmittelschnitt durch den Koppelkopf einer weiteren Ausführungsform eines Ultraschall-Handstücks,
- Figur 8: eine Ansicht von unten auf das Ultraschall-Handstück gemäß der Figur 7.

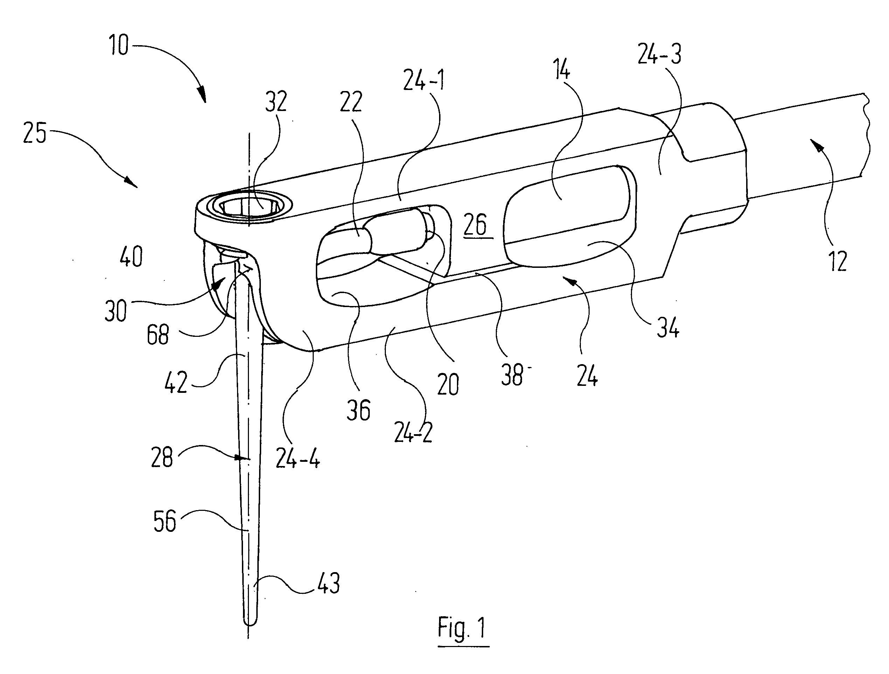

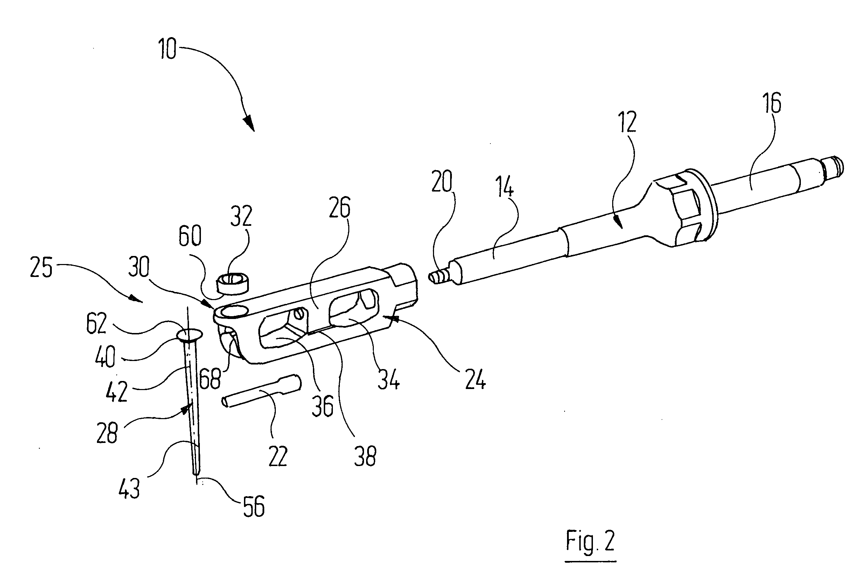

Ein in den Figuren 1 und 2 dargestelltes Ultraschall-Handstück 10 für Dentalanwendungen weist eine Antriebseinheit 12 auf, die einen nicht näher dargestellten Ultraschallschwinger enthält. Der Ultraschallschwinger ist aus einem Stapel von zylinderabschnittsförmigen, piezoelektrischen Elementen aufgebaut und kann durch eine nicht dargestellte Betriebsschaltung zur Erzeugung von translatorischen Oszillationsschwingungen elektrisch angeregt werden.

Die translatorischen Oszillationsschwingungen treten parallel zur Längsachse der Antriebseinheit 12 auf und werden auf eine Sonotrode 14 geleitet, die mit einem Piezoantrieb 16 verbunden ist.

Auf das Ende der Sonotrode 14 ist ein einstückig ausgebildeter, aus gut schwingendem Metall wie Titan hergestellter Umlenkkopf 24 mit einem mittigen Koppelsteg 26 aufgeschraubt. Damit führt die von der Sonotrode 14 übertragene translatorische Oszillationsbewegung zu einer bereichsweisen transversalen elastischen Biegung der in Figur 1 horizontalen schwächeren Balken 24-1, 24-2 des Umlenkkopfs 24, die gleiche Länge und im wesentlichen gleichen Querschnitt haben.

Zugleich werden vertikale Arme 24-3 und 24-4 des Umlenkkopfes 24, die größere Dicke haben, im wesentlichen senkrecht zur Längsachse des Gerätes bewegt. Die Oszillationsbewegung des Balkens 24-4 wird zum Antreiben eines endseitig am Umlenkkopf 24 anbringbaren Werkzeuges 28 genutzt. Hierzu ist der Balken 24-4 als Spannkopf 25 ausgebildet.

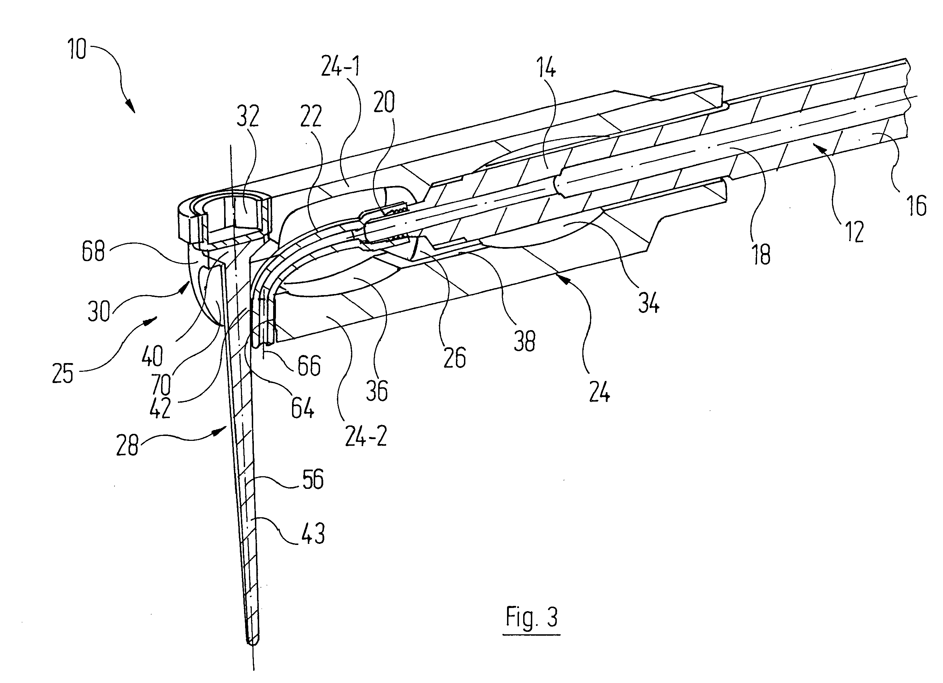

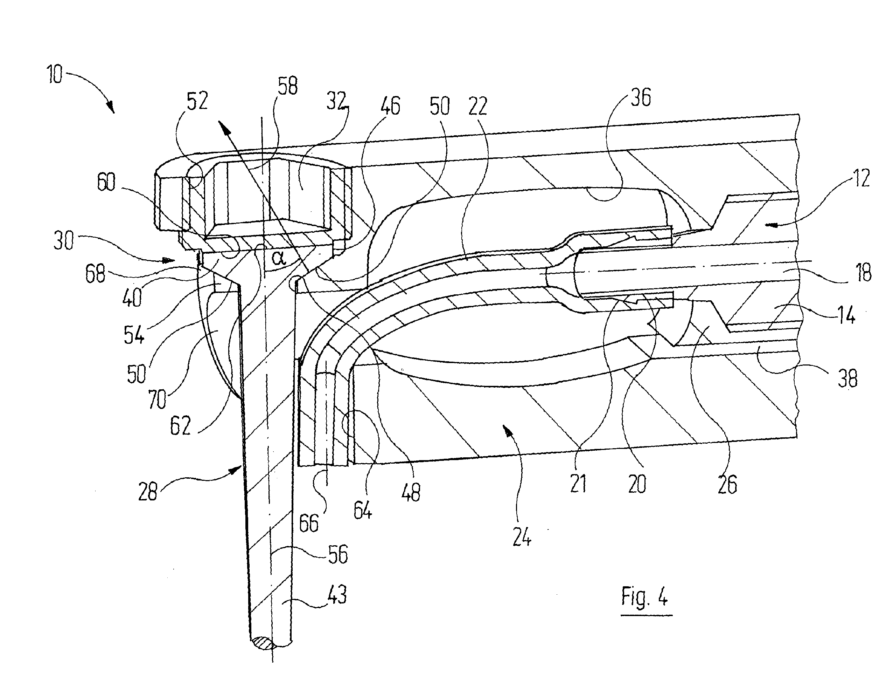

Das Werkzeug 28 ist dabei in einer Werkzeugaufnahme 30 aufgenommen, die anhand der Figuren 3 und 4 nachstehend näher beschrieben wird. Zur Festlegung des Werkzeugs 28 in der Werkzeugaufnahme ist eine Feststellschraube 32 vorgesehen, die mit ihrem Außengewinde in ein korrespondierend ausgeführtes Innengewinde 33 des Umlenkkopfs 24 einschraubbar ist.

Durch die Sonotrode 14 erstreckt sich eine in der Figur 3 näher dargestellte Axialbohrung 18, die als Zuführkanal für ein Arbeitsfluid dient. Endseitig ist an der Sonotrode 14 ein Schlauchstutzen 20 angebracht, der mit der Axialbohrung 18 in Verbindung steht und der außen mit konusförmigen Rippen versehen ist, die zur Festlegung eines Schlauchs 22 aus einem elastischen Material vorgesehen sind, wie nachstehend näher beschrieben wird.

Wie aus den Figuren 3 und 4 entnommen werden kann, handelt es sich bei dem Umlenkkopf 24 um ein einstückiges Metallteil, das zwei Durchbrüche 34, 36 mit einem jeweils im Wesentlichen rechteckig-ovalen Querschnitt aufweist. Zwischen ihnen liegt der Koppelsteg 26, der vom Balken 24-2 durch einen durchgehenden Schlitz 38 beabstandet ist.

Durch die Durchbrüche 34, 36 bzw. die Balken 24-1 bis 24-4 und die Elastizität des Metallmaterials, aus dem der Umlenkkopf 24 hergestellt ist, wird ein schwingungsfähiger Rahmen gebildet, der die in der Geräteachse erfolgende und über den Koppelsteg 26 eingeleitete Oszillationsbewegung des Ultraschallschwingers in eine zur Geräteachse senkrechte Oszillationsbewegung des Werkzeugs 28 umgesetzt.

Das Werkzeug 28 hat einen zylindrischen Schaftabschnitt 42 und einen sich zum freien Ende hin verjüngenden Arbeitsabschnitt.

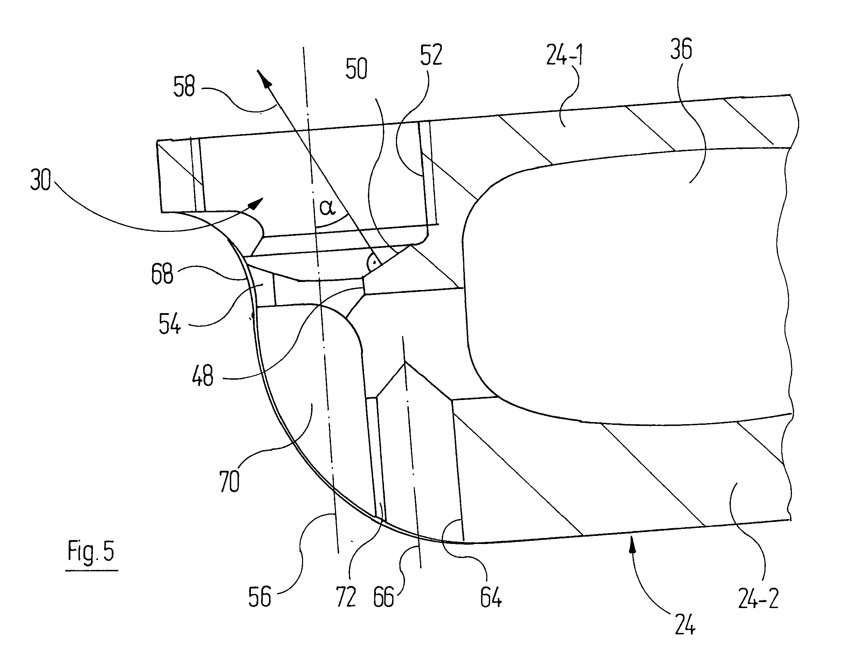

Es wird nun insbesondere auf die Figuren 2 bis 5 Bezug genommen, die Einzelheiten des Spannkopfes 25 und des Einspannendes des Werkzeuges 28 zeigen.

Zur Festlegung des Werkzeugs 28 am Spannkopf 25 weist der Schaftabschnitt 42 einen rotationssymmetrischen Schaftkopf 40 auf, der eine konusförmige in der Zeichnung untere Anlagefläche 44 und eine sich daran anschließenden zylindrische Umfangsfläche 46 hat. Die Werkzeugaufnahme 30 weist ihrerseits eine an den Maximaldurchmesser des Werkzeugschafts 42 angepasste Bohrung 48 auf, durch die der Werkzeugschaft 42 hindurchgesteckt werden kann.

An die Bohrung 48 schließt sich eine konusförmige Stützfläche 50 an, die als Auflagefläche für die Anlagefläche 44 des Werkzeugs 28 dient. Die Stützfläche 50 geht in eine Gewindebohrung 52 über, die einen größeren Durchmesser als die Bohrung 48 für den Werkzeugschaft 42 aufweist und die zur Aufnahme der Feststellschraube 32 dient.

Grundsätzlich könnte das Werkzeug 28 nach Entfernen der Feststellschraube 32 in der Zeichnung nach oben aus der Werkzeugaufnahme 30 entnommen werden. Allerdings müsste hierzu die Feststellschraube 32 vollständig entnommen werden. Dies ist aber zeitraubend und es ist hiermit auch die Gefahr eines Verlusts der Feststellschraube 32 gegeben. Zudem kann ein neuerliches Einschrauben der Feststellschraube 32 zu Handhabungsproblemen beim korrekten Ansetzen des Außengewindes der Feststellschraube führen.

Aus diesem Grund ist der Umlenkkopf 24 mit einem Entnahmeschlitz 54 versehen, der ein korrespondierend zur Längskontur des Werkzeugs 28 ausgeführtes Profil aufweist und der ausgehend von einer Stirnseite 68 des Umlenkkopfs 24 zur Werkzeugaufnahme 30 verläuft.

Der Entnahmeschlitz 54 ist dabei so angeordnet, dass das Werkzeug 28 nur dann ausgetauscht werden kann, wenn die Feststellschraube 32 um eine erhebliche Strecke aus der in den Figuren 3 und 4 dargestellten Verriegelungsposition nach oben herausgeschraubt wurde. Dadurch wird verhindert, dass bei schlechter Arretierung der Feststellschraube 32 und leichtem Lösen der Letzteren das Werkzeug 28 unbeabsichtigt aus der Werkzeugaufnahme freikommt. Das Werkzeug 28 ist also bei zumindest nahezu korrekter bzw. vollständig korrekter Verschraubung der Feststellschraube 32 in beiden axialen Richtungen formschlüssig in der Werkzeugaufnahme 30 festgelegt.

Bei flächiger Anlage der Feststellschraube 32 am Werkzeug 28 ist eine spielfreie Festlegung des Werkzeugs 28 in der Werkzugaufnahme 30 und eine reibschlüssige Verriegelung des Festellschraube 32 in ihrer Verriegelungsposition gewährleistet. Hierzu sind zusammenarbeitende Endflächen 60, 62 von Feststellschraube 32 und Werkzeugschaft 42 beide eben und senkrecht zur Achse der Werkzeugaufnahme 30.

Mit dem Lösen der Feststellschraube 32 wird zunächst die spielfreie Fixierung des Werkzeugs 28 in der Werkzeugaufnahme 30 aufgehoben, jedoch ohne dass das Werkzeug 28 durch den Entnahmeschlitz 54 schon entnommen werden kann. Dies ist erst möglich, wenn die Feststellschraube 32 vom Benutzer bewusst in eine Entriegelungsstellung gebracht wird, beispielsweise durch Drehung um einige volle Umdrehungen, in der zumindest nahezu der volle Querschnitt des Entnahmeschlitzes 54 von der Feststellschraube 32 freigegeben wird. Nur wenn dies der Fall ist, kann das Werkzeug 28 durch den Entnahmeschlitz 54 aus der Werkzeugaufnahme 30 entnommen werden.

In der Werkzeugaufnahme 30 bildet die Stützfläche 50 einen ersten Hinterschnitt, durch den der Schaftkopf 40 des Werkzeugs 28 in einer ersten Axialrichtung (zur Spitze des Werkzeuges 28 hin) parallel zu seiner Mittelachse 56 festgelegt werden kann. Dabei arbeitet die Stützfläche 50 mit der Anlagefläche 44 zusammen.

Eine Flächennormale 58 der Stützfläche 50 bildet einen spitzen Winkel α zur Mittelachse 56 von Werkzeug 28 und Werkzeugaufnahme 30.

Für eine axiale Abstützung des Werkzeugs 28 am Umlenkkopf 24 in der zweiten axialen Richtung (in der Zeichnung nach oben) dient die Feststellschraube 32.

Die dem Werkzeugschaft 42 zugewandte Stirnseite 60 der Feststellschraube 32 ist ebenso wie die Oberseite 62 des Werkzeugschaftes 42 als transversale Planfläche ausgebildet und ermöglicht eine vollständige axial formschlüssige und umfangsmässig reibschlüssige Festlegung des Werkzeugs 28 am Umlenkkopf 24. Eine Flächennormale der Stirnseite 60 ist parallel zur Mittelachse 56 ausgerichtet.

Gemäß den Figuren 3, 4 und 5 ist im Umlenkkopf 24 eine Schlauch-Führungsbohrung 64 vorgesehen, deren Mittelachse 66 parallel zur Mittelachse 56 des Werkzeugs 28 und der Werkzeugaufnahme 30 verläuft und die sich ausgehend von einer Unterseite des Umlenkkopfs 24 in den Durchbruch 36 erstreckt. Genauer gesagt erfolgt dies über einen Schlitz 72, der zur Bohrung 48 hin offen ist und parallel zu dieser verläuft.

Von der Vorderseite des Umlenkkopfes 24 her ist die Führungsbohrung 64 über einen eine Verlängerung des Entnahmeschlitzes 54 darstellenden Schlitz 70 zugänglich. Die Schlitze 70 und 72 bilden somit zusammen eine T-förmige Schlitzanordnung.

In der Führungsbohrung 64 wird ein auslaßseitiger Endbereich eines flexiblen Schlauchs 22 gehalten, dessen einlaßseitiger Endbereich am Schlauchstutzen 20 der Sonotrode 14 dicht festgelegt ist. Durch den wegen des Schlitzes 72 C-förmigen transversalen Querschnitt der Wand der Führungsbohrung 64 kann der Schlauch 22, der etwas größeren Durchmesser hat als die Bohrung 48 unter elastischer Verformung einfach vom Schlitz 72 her formschlüssig in die Führungsbohrung 64 eingeclipst werden. Durch eine nur lose formschlüssige Aufnahme des Schlauchs 22 in der Führungsbohrung 64 werden unerwünschte Schwingungsankopplungen des Schlauches 22 an den Umlenkkopf 24 und eine dadurch bedingte Erwärmung des Schlauchs 22 vermieden. Diesen Effekt kann man noch dadurch verstärken, dass man die Wandstärke des Schlauches vom einlaßseitigen Ende zum auslassseitigen Ende hin abnehmen läßt.

Durch die Antriebseinheit 12 hindurch kann ein ggf. abrasive Partikel enthaltendes Arbeitsfluid in den Schlauch 22 eingespeist werden und tritt an dem in der Führungsbohrung 64 aufgenommenen Ende des Schlauchs 22 in die Umgebung aus.

Der größte Teil des Arbeitsfluids trifft so auf das Werkzeug 28 bzw. auf die mit dem Werkzeug 28 zu bearbeitende dentale Oberfläche auf. Dadurch wird ein effizienter Einsatz des Arbeitsfluids gewährleistet, das somit punktgenau an den Einsatzort dosiert werden kann.

Eine Demontage des Schlauchs 22 wird vorzugsweise so vorgenommen, dass zunächst das Werkzeug 28 aus der Werkzeugaufnahme 30 entnommen wird, um den Schlitz 72 freizugeben. Anschließend wird der Schlauch 22 aus der Führungsbohrung 64, in die er formschlüssig eingeclipst ist, entnommen und erstreckt sich nunmehr im Wesentlichen parallel zur Längsachse des Umlenkkopfes 24. Anschließend wird der Schlauch 22 nach vorne von dem in den Durchbruch 36 hineinragenden Schlauchstutzen 20 abgezogen.

Ein neuer Schlauch 22 wird in umgekehrter Reihenfolge zunächst auf den Schlauchstutzen 20 aufgeschoben und wird dann um 90° gebogen und in die Führungsbohrung 64 eingeclipst.

Der Schlauch 22 ist vorzugsweise aus einem Elastomer, insbesondere einem weichen Silikonmaterial, hergestellt , also einem flexiblen Kunststoffmaterial. Besonders vorteilhaft ist es, wenn die Wandstärke des Schlauchs auf den durch den Abstand und die Ausrichtung des Schlauchstutzens 20 und der Führungsbohrung 64 bestimmten Biegeradius abgestimmt ist, so dass der Schlauch 22 nicht kollabiert, was den Strom des Arbeitsfluids behindern würde.

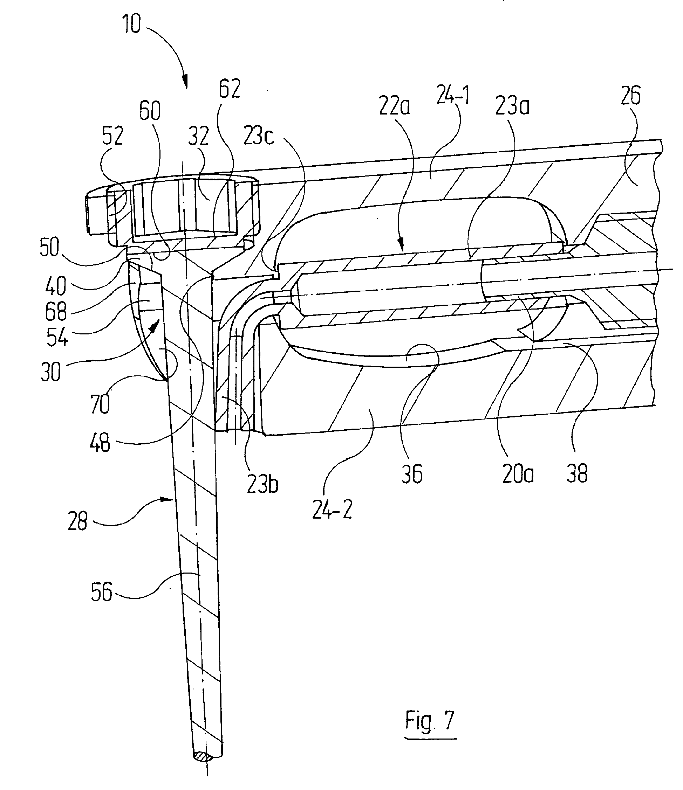

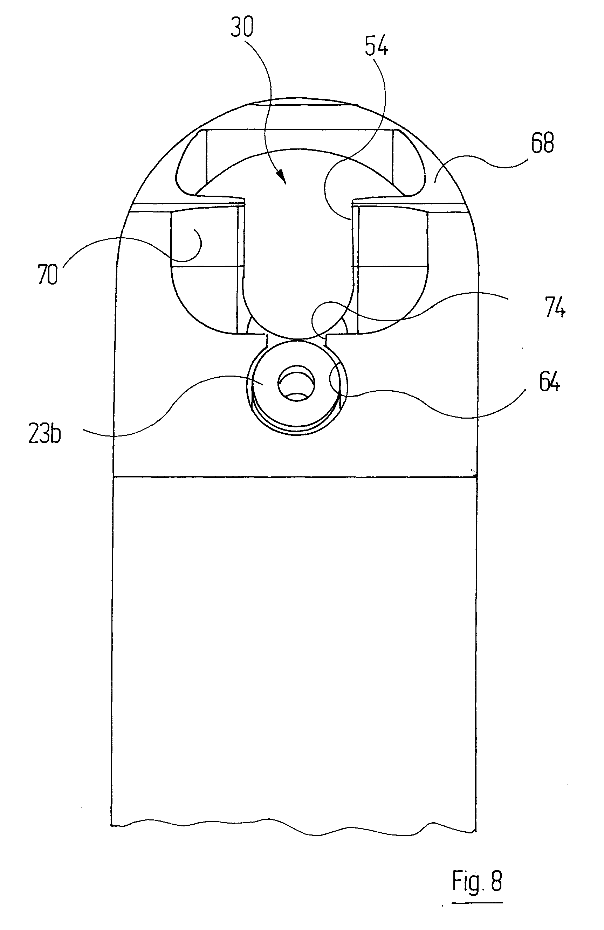

Die in den Fig. 7 und 8 dargestellte Ausführungsform des Schlauchs 22a unterscheidet sich von dem obenstehend beschriebenen Schlauch 22 durch abschnittsweise unterschiedliche Radien bzw. Durchmesser. Ein zum Aufstecken auf den frei von Sicherungsrippen ausgeführten, zylinderhülsenförmigen Schlauchstutzen 20a vorgesehener Koppelabschnitt 23a des Schlauchs 22a weist einen auf den Schlauchstutzen 20a angepassten Innendurchmesser auf. Damit kann der Schlauch 20a nahezu kraftfrei auf den Schlauchstutzen 22a aufgeschoben werden.

Die Wandstärke des Koppelabschnitts 23a entspricht im Wesentlichen der Wandstärke des sich daran anschließenden Austrittsabschnitts 23b. Bedingt durch den größeren Radius bzw. Außendurchmesser des Koppelabschnitts 23a kann dieser trotz der aus Gründen einer vereinfachten Montage kurz gehaltenen freien Länge des Schlauchstutzens 20a die Distanz bis zum vorderen Ende des Durchbruchs 36 freitragend überspannen und bedarf keiner weiteren Abstützung am Umlenkkopf 24.

Der sich an den Koppelabschnitt 23a anschließende Austrittsabschnitt 23b weist einen geringeren Außendurchmesser als der Koppelabschnitt 23a auf und ist bereits in die in Fig. 7 dargestellte Krümmung vorgeformt, um eine möglichst kontaktfreie Aufnahme in der Führungsbohrung 64 zu gewährleisten. Die Wandstärken des Koppelabschnitts 23a und des Austrittsabschnitts 23b sind zumindest im Wesentlichen gleich gewählt.

Durch die vorgeformte Ausführung des Schlauchs 22a wird eine Verdrehsicherung erreicht, so dass während des Betriebs des Ultraschall-Handstücks 10 kein unerwünschtes Verdrehen des Schlauchs 22a gegenüber dem Schlauchstutzen 20a zu erwarten ist.

Mit dem frei von Sicherungsrippen ausgeführten, zylinderhülsenförmigen Schlauchstutzen 20a ist ein einfaches Aufstecken und Abnehmen des Schlauchs 22a gewährleistet, da keine lokale Deformation des Koppelabschnitts 23a zum Aufschieben auf den Schlauchstutzen 20a erfolgen muss. Die achsiale Länge des Koppelabschnitts 23a ist so bemessen, dass bei vollständig auf den Schlauchstutzen 20a aufgeschobenem Schlauch 22a ein Luftspalt zwischen einer Stirnfläche 23c des Koppelabschnitts 23a und der Innenfläche des Durchbruchs 36 vorliegt. Dieser Luftspalt ist derart bemessen, dass auch bei einer Maximalamplitude des Umlenkkopfs 24 keine, zumindest keine nennenswerte Berührung der Stirnfläche 23c und dem Umlenkkopf 24 stattfindet. Dadurch wird eine unerwünschte Übertragung von Ultraschallenergie vom Umlenkkopf 24 auf den Schlauch 22a vermindert bzw. verhindert.

Nach Einsetzen des Werkzeugs 28in den Umlenkkopf 24 wird anhand der Geometrie des Koppelabschnitts 23a ein Entnehmen aus dem Durchbruch verhindert, da der angeformte, gekrümmte Austrittsabschnitt 23b derart in der bereichsweise vom Werkzeug 28 verschlossenen Schlauch-Führungsbohrung 64 aufgenommen ist, dass kein Entweichen möglich ist.

Aus der Fig. 8 ist die Gestaltgebung der Schlauch-Führungsbohrung 64 zu entnehmen, die sich an den Schlitz 70 anschließt und ein Entnehmen des Schlauchs 22a durch Zurückbiegen des abgewinkelten Austrittsabschnitts 23b in Richtung auf die Achse des Koppelabschnittes 23a ermöglicht. Um eine Beschädigung des Austrittsabschnitts 23b zu vermeiden, ist der zwischen dem Schlitz 70 und der Schlauch-Führungsbohrung 64 ausgebildete Spalt 74 mit parallel zueinander ausgerichteten Wandabschnitten geformt, so dass keine scharfen Kanten vorliegen. Aus der Fig. 8 ist ebenfalls erkennbar, dass der Austrittsabschnitt 23b einen geringeren Aussendurchmesser als die Schlauch-Führungsbohrung 64 aufweist, um eine Übertragung von Ultraschallenergie vom Umlenkkopf 24 auf den Schlauch 22a zu vermeiden.

Bei einer nicht dargestellten weiteren Ausführungsform der Erfindung kann der Schlauch 22 mit einem im Schlauchmaterial integrierten Verstärkungsmaterial, insbesondere einem Verstärkungsgewebe aus Kunststoff oder Drahtgeflecht versehen sein, um auch bei kleinen Biegeradien einen freien Durchgang des Arbeitsfluids zu gewährleisten.

Während der Umlenkkopf 24 vorzugsweise aus dem besonders zähen und hochfesten Material Titan hergestellt ist, wird als Material für die Feststellschraube 32 Bronze, Messing oder ein Kunststoffmaterial mit hoher Dichte, insbesondere Polytetrafluorethylen (PTFE), Polyaryletherketon (PAEK) oder Polyethyletherketon (PEEK) verwendet.

Bei einer ebenfalls nicht dargestellten Ausführungsform der Erfindung sind das Werkzeug und die Feststellschraube einstückig miteinander ausgeführt. Dies ermöglicht einen raschen Werkzeugwechsel und eine zuverlässige, formschlüssige Festlegung des Werkzeugs am Umlenkkopf.

## Patentansprüche

1. Ultraschall-Handstück (10), insbesondere für dentale und medizinische Anwendungen mit einer Antriebseinheit (12) zum oszillierenden Antreiben eines Werkzeuges (28) über einen Koppelkopf (24), und mit zum Werkzeug (28) gerichteten Zuführeinrichtung (18) für ein Arbeitsfluid, **dadurch gekennzeichnet, dass** ein Endabschnitt (22) der Zuführeinrichtung (18, 22) auswechselbar ist.

2. Ultraschall-Handstück nach Anspruch 1, **dadurch gekennzeichnet, dass** der auswechselbare Endabschnitt (22) aus einem flexiblen Material hergestellt ist, vorzugsweise aus einem Silikonmaterial.

3. Ultraschall-Handstück nach Anspruch 1 oder 2, **dadurch gekennzeichnet, dass** der auswechselbare Endabschnitt (22) mit einem feststehenden Kupplungsstutzen (20) einer im wesentlichen starren Zuleitung (18) der Zuführeinrichtung (18, 22) gekoppelt ist.

4. Ultraschall-Handstück nach einem der vorhergehenden Ansprüche, **dadurch gekennzeichnet, dass** im Koppelkopf (24) wenigstens eine Führungsbohrung (64) zur Aufnahme eines Abschnittes des auswechselbaren Endabschnitts (22) vorgesehen ist, welche vorzugsweise einer Werkzeugaufnahme (30) eng benachbart ist, so dass ein zwischen Werkzeugaufnahme (30) und Führungsbohrung (64) verbleibender Materialsteg eine Dicke von 0,2 mm bis 2 mm, vorzugsweise 0,5 mm bis 1 mm hat.

5. Ultraschall-Handstück nach Anspruch 4, **dadurch gekennzeichnet, dass** eine Mittelachse (66) der Führungsbohrung (64) in einem Winkel kleiner 30 Grad, vorzugsweise kleiner 15 Grad, besonders bevorzugt im Wesentlichen parallel, zur Hauptachse (56) des Werkzeugs (28) ausgerichtet ist.

6. Ultraschall-Handstück nach Anspruch 4 oder 5, **dadurch gekennzeichnet, dass** die Führungsbohrung (64) zumindest einen im Wesentlichen parallel zur Mittelachse (66) verlaufenden radialen nach außen offenen Schlitz (72) aufweist.

7. Ultraschall-Handstück nach Anspruch 6, **dadurch gekennzeichnet, dass** die Breite des Schlitzes (72) kleiner ist als der Durchmesser des auswechselbaren Endabschnittes (22).

8. Ultraschall-Handstück nach einem der vorhergehenden An sprüche, **dadurch gekennzeichnet, dass** der geführte Abschnitt des auswechselbaren Endabschnittes (22) zumindest im wesentlichen kraftfrei in der Führungsbohrung (64) aufgenommen ist.

9. Ultraschall-Handstück nach einem der vorhergehenden An sprüche, **dadurch gekennzeichnet, dass** die Wandstärke des auswechselbaren Endabschnittes (22) zum freien Ende hin abnimmt.

10. Ultraschall-Handstück nach einem der vorhergehenden An sprüche, **dadurch gekennzeichnet, dass** der auswechselbare Endabschnitt (22) ein Spritzteil ist.

11. Ultraschall-Handstück nach einem der vorhergehenden An sprüche, **dadurch gekennzeichnet, dass** die Zuführeinrichtung (18, 22) einen Kanal (18) umfasst, der sich durch die Antriebseinheit (12) vorzugsweise mittig hindurcherstreckt.

12. Ultraschall-Handstück nach einem der vorhergehenden Ansprüche, **dadurch gekennzeichnet, dass** ein das Werkzeug (28) halternder Spannkopf (25) einen nach außen offenen Schlitz (70) aufweist, durch welchen der auswechselbare Endabschnitt (22) hindurchbewegbar ist.

13. Ultraschall-Handstück nach einem der Ansprüche 2 bis 12,
**dadurch gekennzeichnet, dass** der Kupplungsstutzen (20) vorzugsweise einen oder mehrere umlaufende Sicherungsrippen (21) aufweist, die eine zuverlässige, kraftschlüssige Verriegelung des flexiblen Endabschnitts (22) auf dem Kupplungsstutzen (20) gewährleisten.

14. Ultraschall-Handstück nach einem der vorhergehenden Ansprüche, **dadurch gekennzeichnet, dass** der auswechselbare Endabschnitt (22a) derart vorgeformt ist, dass er zumindest im wesentlichen kraftfrei, vorzugsweise berührungsfrei, in der Führungsbohrung (64) des Koppelkopfs (24) aufgenommen ist.

15. Ultraschall-Handstück nach einem der vorhergehenden Ansprüche, **dadurch gekennzeichnet, dass** der auswechselbare Endabschnitt (22a) einen Koppelabschnitt (23b) mit vergrößertem Durchmesser aufweist, dessen Längserstreckung vorzugsweise zumindest im Wesentlichen an die Größe eines benachbart zur Werkzeugaufnahme (48) vorgesehenen Durchbruchs (36) des Koppelkopfes (26) angepasst ist.

16. Ultraschall-Handstück nach Anspruch 15, **dadurch gekennzeichnet, dass** zwischen einer Stirnfläche (23c) des Koppelabschnitts (23a) und dem Koppelkopf (24) ein Luftspalt mit einer Spaltweite größer als die lokale Schwingungsamplitude des Koppelkopfs (24) vorliegt.

17. Ultraschall-Handstück nach Anspruch 15 oder 16, **dadurch gekennzeichnet, dass** ein Austrittsabschnitt (23b) gekrümmt geformt ist und vorzugsweise einen kleineren Außendurchmesser als die Führungsbohrung (64) aufweist.
